# EUROPÄISCHE PATENTANMELDUNG

(11) **EP 1 541 959 A1**
(43) Veröffentlichungstag der Anmeldung: **15.06.2005**
(21) Anmeldenummer: 03028228.9
(22) Anmeldetag: 09.12.2003
(51) Int. Cl.: G01B 11/00, G01S 17/00, G01B 21/04

(54) **Vorrichtung und Verfahren zum Bestimmen von Positionskoordinaten**

(71) Anmelder: metronom AG, 55120 Mainz (DE)
(72) Erfinder: Brüning, Thomas, 55120 Mainz (DE); Nabs, David, 39288 Burg (DE); Blondeau, Jean Dr., 74889 Sinsheim-Dühren (DE)
(74) Vertreter: Grünecker, Kinkeldey, Stockmair & Schwanhäusser Anwaltssozietät

(57) **Zusammenfassung**

Die Erfindung betrifft eine Messvorrichtung und ein Verfahren zum Bestimmen von Positionskoordinaten, wobei wenigstens zwei Entfernungsmesseinrichtungen (1,1',1") und wenigstens ein Verbindungselement (2) zum Verbinden der zwei Entfernungsmesseinrichtungen verwendet werden. Dabei ist das Verbindungselement derart ausgebildet, dass der Abstand zwischen den wenigstens zwei Entfernungsmesseinrichtungen während einer Messung bestimmbar oder bei Standardmessbedingungen im Wesentlichen konstant ist.
Die Entfernungsmesseinrichtungen und das Verbindungselement werden bevorzugt durch magnetische Kräfte zusammengehalten. Das Verbindungselement umfasst bevorzugt CFK, insbesondere unter Verwendung van Tennax ®, welches eine sehr niedrige Wärmeausdehung besitzt.

## Beschreibung

Die Erfindung betrifft eine Messvorrichtung zum Bestimmen von Positionskoordinaten und ein Verfahren zum Bestimmen von Positionskoordinaten.

In vielen Bereichen der Technik besteht die Notwendigkeit, die Koordinaten von bestimmten Positionen mit hoher Genauigkeit zu bestimmen. Dies ist beispielsweise in der Fertigungstechnik der Fall, wo Positionen oder Oberflächen von Fertigungsteilen überprüft oder Werkzeugmaschinen kalibriert werden müssen.

Eine aus dem Stand der Technik bekannte Vorrichtung zum Bestimmen von Positionskoordinaten ist ein sogenannter Laser-Tracker. Ein Laser-Tracker sendet einen Laserstrahl in Richtung eines Zielpunktes aus. An dem Zielpunkt ist ein Retroreflektor angeordnet, der aus drei senkrecht aufeinander stehenden Planspiegeln besteht. Dieser Retroreflektor reflektiert den eintreffenden Laserstrahl zurück auf den Laser-Tracker, wo er auf eine Fotozelle, beispielsweise eine Vier-Quadranten-Fotozelle fällt. Die Richtung des ausgesendeten Laserstrahls kann mittels Servomotoren gelenkt werden, so dass der Strahl selbst bei einem Bewegen des Retroreflektors immer auf dessen Zentrum gerichtet wird.

Die Positionsbestimmung des Retroreflektors erfolgt über zwei Winkelencoder (Horizontalwinkel und Vertikalwinkel) und ein Laser-Interferometer für die Distanzmessung. Zu Beginn der Messung wird der Retroreflektor in einer Nullpunktposition angeordnet und der Laserstrahl auf ihn gerichtet. Danach wird der Retroreflektor zum Zielpunkt bewegt, wobei der Laserstrahl den Retroreflektor verfolgt. Durch ein Zählen der durchlaufenden Ringe im Interferometer kann damit die Zielposition relativ zu der Nullpunktposition bestimmt werden.

Manche Laser-Tracker sind zusätzlich für eine absolute Distanzmessung (ADM) ausgerüstet. Damit kann direkt die Distanz zwischen dem Laser-Tracker und einem an einem Zielpunkt angeordneten Retroreflektor durch Messung der Laufzeit eines von dem Laser-Tracker ausgesendeten Infrarotsignals bestimmt werden.

Bei den herkömmlichen Laser-Trackern ist die Entfernungsmessung mittels des Interferometers sehr genau. Der Nachteil der Laser-Tracker besteht jedoch darin, dass die Genauigkeit der Winkelencoder verhältnismäßig schlecht ist, was den gesamten Positionskoordinatenfehler vergrößert.

Daher besteht die der Erfindung zu Grunde liegende Aufgabe darin, eine Messvorrichtung zum Bestimmen von Positionskoordinaten bereitzustellen, die eine erhöhte Genauigkeit aufweist.

Diese Aufgabe wird gelöst durch eine Messvorrichtung gemäß Anspruch 1. Dem entsprechend wird eine Messvorrichtung zum Bestimmen von Positionskoordinaten bereitgestellt, umfassend wenigstens zwei Entfernungsmesseinrichtungen und wenigstens ein Verbindungselement zum Verbinden der zwei Entfernungsmesseinrichtungen, wobei das wenigstens eine Verbindungselement derart ausgebildet ist, dass der Abstand zwischen den wenigstens zwei Entfernungsmesseinrichtungen während einer Messung bestimmbar oder bei Standardmessbedingungen im Wesentlichen konstant ist.

Durch die Verwendung von wenigstens zwei Entfernungsmesseinrichtungen können die Positionskoordinaten eines Zielpunkts mit erhöhter Genauigkeit bestimmt werden, da höchstens eine Winkelmesseinrichtung verwendet wird. Falls genau zwei Entfernungsmesseinrichtungen und eine Winkelmesseinrichtung verwendet werden, ergeben sich die Positionskoordinaten eines Zielpunkts aus der Schnittmenge von zwei Kugeln mit entsprechendem Radius sowie dem gemessenen Winkelpunkt. Falls drei Entfernungsmesseinrichtungen verwendet werden, ergeben sich die Positionskoordinaten aus dem Schnittpunkt von drei Kugeln mit entsprechenden Radien. Da die Entfernungsmesseinrichtungen durch Verbindungselemente verbunden sind, die bei Standardmessbedingungen, also bei einer Temperatur von -20° C bis +70°C und einer Luftfeuchtigkeit von 0 % bis 100 %, einen im Wesentlichen konstanten Abstand zwischen den Entfernungsmesseinrichtungen ermöglichen, sind die relativen Positionen der Entfernungsmesseinrichtungen zueinander mit sehr hoher Genauigkeit bekannt, wodurch ein Bestimmen der Positionskoordinaten mit entsprechend hoher Genauigkeit erreicht werden kann. Alternativ sollen die Abstände während einer Messung bestimmbar sein, so dass auch hier die relativen Positionen der Entfemungsmesseinrichtungen mit sehr hoher Genauigkeit bekannt sind. Beispielsweise kann ein Material gewählt werden, dessen Materialparameter, wie der thermische Längenausdehnungskoeffizient α, genau bekannt sind, so dass bei Kenntnis der Umgebungsparameter, z.B. Temperatur, während einer Messung der Abstand genau bestimmbar ist. Vorzugsweise kann der Abstand während einer Messung mit einem Fehler kleiner als 10⁻³ %, höchst vorzugsweise kleiner als 10⁻⁴ %, bestimmt werden.

Vorzugsweise kann die Messvorrichtung drei Entfernungsmesseinrichtungen und wenigstens zwei Verbindungselemente umfassen. Damit lassen sich die Positionskoordinaten beruhend auf ausschließlich gemessenen Distanzen bestimmen, was im Vergleich mit der Variante mit zwei Entfernungsmesseinrichtungen und einer Winkelmesseinrichtung eine zusätzlich erhöhte Genauigkeit zur Folge hat.

Das wenigstens eine Verbindungselement kann vorteilhafterweise stabförmig ausgebildet sein. Dies erlaubt insbesondere ein genaues Positionieren der Entfernungsmesseinrichtungen an den Enden der stabförmigen Verbindungselemente.

Gemäß einer vorteilhaften Weiterbildung können die beschriebenen Messvorrichtungen sechs Verbindungselemente umfassen, wobei die Verbindungselemente die Kanten eines Tetraeders und die wenigstens zwei Entfernungsmesseinrichtungen jeweils eine Ecke des Tetraeders bilden. Vorzugsweise kann das Tetraeder ein reguläres Tetraeder sein.

Auf diese Weise lässt sich die Messvorrichtung in einfacher Weise und mit ausgezeichneter Reproduzierbarkeit der relativen Positionen der Entfernungsmesseinrichtungen auf- und wieder abbauen. Die Zentren der Entfernungsmesseinrichtungen liegen näherungsweise auf den Verlängerungen der Achsen der Verbindungselemente, um bei Biegung der Verbindungselemente eine minimale Längenänderung zu erfahren. Verschiebungen der Verbindungselemente haben nur einen minimalen Einfluss auf die Geometrie des Tetraeders. Alternative Geometrien sind jedoch auch möglich.

Insbesondere bei einem Tetraederaufbau kann die Messvorrichtung weiterhin Eckenelemente umfassen, wobei die Eckenelemente eine den Entfernungsmesseinrichtungen entsprechende Geometrie aufweisen und die restlichen Ecken des Tetraeders bilden. Falls also drei Entfernungsmesseinrichtungen vorgesehen sind, umfasst die Messvorrichtung noch ein Eckenelement. Auf diese Weise bleibt die Tetraedergeometrie gewahrt, was einen Aufbau mit einer großen Genauigkeit der Relativpositionen der Entfernungsmesseinrichtungen garantiert.

Gemäß einer vorteilhaften Weiterbildung können das wenigstens eine Verbindungselement und die wenigstens zwei Entfernungsmesseinrichtungen, insbesondere durch magnetische Kräfte, miteinander lösbar verbindbar, sein.

Damit lässt sich die Messvorrichtung in einfacher Weise montieren und demontieren, was einen vereinfachten Transport der Messvorrichtung an den Einsatzort ermöglicht. Zur Ausbildung der magnetischen Verbindung können die Verbindungselemente Magnete umfassen. Die Entfernungsmesseinrichtungen können aus magnetischem Material bestehen oder Magnete aufweisen.

Vorzugsweise kann das wenigstens eine Verbindungselement ein Material umfassen, das einen thermischen Längenausdehnungskoeffizient von α = 0 ± 20*µm* /°*Cm* , vorzugsweise *α* = 0 ± 10µm/*°Cm ,* höchst vorzugsweise *α = 0 ± 1µm*/*°Cm* umfassen.

Mit einem solchen Längenausdehnungskoeffizient (α = Δ L/L, wobei Δ L die Längenänderung in *µm* pro °C Temperaturänderung pro Länge L in m ist) können die jeweiligen Abstände zwischen den Entfernungsmesseinrichtungen bei Standardmessbedingungen im Wesentlichen konstant gehalten werden.

Alternativ können die Verbindungselemente auch zwei Materialien umfassen (beispielsweise wenn die Verbindungselemente Magnete umfassen), wobei die Längenausdehnungskoeffizienten der beiden Materialien derart aufeinander abgestimmt sind, dass sich ihre Längenänderungen bei sich ändernden Umgebungsbedingungen im Wesentlichen kompensieren.

Vorzugsweise kann das Material CFK (Kohlenstoff-Faserverstärkter Kunststoff) umfassen. Bei der Verwendung eines solchen Materials können insbesondere sogar thermische Längenausdehnungskoeffizienten im Bereich von *α* = 0 ± 0.1 *µm* /*°Cm* realisiert werden. Ein solches Verbindungselement hat außer im Rahmen der Fertigungstoleranzen keine thermischen Längenausdehnung bei Standardmessbedingungen.

Gemäß einer vorteilhaften Weiterbildung der zuvor beschriebenen Messvorrichtungen kann jede Entfernungsmesseinrichtung ein interferometer, vorzugsweise ein Laser-Interferometer, umfassen. Mit solchen interferometern können Distanzen mit außergewöhnlich hoher Genauigkeit gemessen werden. Das Interferometer kann Strahlung im sichtbaren, infraroten oder ultravioletten Bereich verwenden.

Vorteilhafter Weise kann wenigstens eine Entfernungsmesseinrichtung wenigstens eine Winkelmesseinrichtung umfassen.

Insbesondere wenn die Messvorrichtung drei Entfernungsmesseinrichtungen umfasst, wird durch das Bestimmen eines Winkels eine Überbestimmung erreicht, was die Angabe des Fehlers bzw. der Genauigkeit der Positionskoordinaten ermöglicht.

Gemäß einer vorteilhaften Weiterbildung, kann jede Entfernungsmesseinrichtung wenigstens einen Servomotor umfassen. Dies ermöglicht ein Verfolgen eines Spiegels bzw. eines Zielpunkts durch die Entfernungsmesseinrichtung.

Vorzugsweise kann jede Entfernungsmesseinrichtung zur automatischen Zielverfolgung ausgebildet sein. Damit können insbesondere vorhandene Servomotoren automatisch gesteuert werden, so dass die Entfernungsmesseinrichtung immer auf den Zielpunkt gerichtet bleibt. Damit wird eine hohe Bedienerfreundlichkeit gewährleistet.

Gemäß einer vorteilhaften Weiterbildung können die zuvor beschriebenen Messvorrichtungen ein Referenzzielelement umfassen. Ein solches Referenzzielelement dient als Nullpunkt für die Entfernungsmesseinrichtungen. Wenn ein solches Referenzzielelement Teil der Messvorrichtung ist, wird ein Aufbau der Messvorrichtung und ein Kalibrieren oder Ausrichten der Entfernungsmesseinrichtungen in einfacher Weise ermöglicht.

Die Erfindung stellt außerdem ein Verfahren zum Bestimmen von Positionskoordinaten mit den Schritten bereit:
a) Ausrichten einer der zuvor beschriebenen Messeinrichtungen,
b) Richten der Entfernungsmesseinrichtungen auf einen Zielpunkt,
c) Bestimmen der Entfernungen zu dem Zielpunkt durch jede Entfernungsmesseinrichtung,
d) Bestimmen der Positionskoordinaten aus den bestimmten Entfernungen.

Mit diesem Verfahren wird durch die Verwendung einer der zuvor beschriebenen Messvorrichtungen eine Positionskoordinatenbestimmung mit sehr hoher Genauigkeit ermöglicht.

Vorzugsweise kann Schritt a) ein Ausrichten der Entfernungsmesseinrichtungen auf ein Referenzzielelement der Messvorrichtung umfassen.

Vorzugsweise kann die Messvorrichtung drei Entfernungsmesseinrichtungen und Schritt d) ein Bestimmen des Schnittpunkts der drei Entfernungen umfassen.

Aus dem Schnitt der drei Entfernungen bzw. dem Schnitt von drei Kugeln mit entsprechenden Radien ergibt sich direkt die zu bestimmende Position. Die Position kann in unterschiedlichen Koordinaten, beispielsweise in kartesischen Koordinaten oder Polarkoordinaten angegeben werden.

Vorteilhafterweise kann Schritt c) weiterhin ein Bestimmen wenigstens eines Winkels und Schritt d) ein Bestimmen aus den bestimmten Entfernungen und dem wenigstens einen bestimmten Winkel umfassen.

Insbesondere bei der Verwendung von drei Entfernungsmesseinrichtungen erlaubt die zusätzliche Bestimmung eines Winkels eine Genauigkeitsangabe über die Positionskoordinaten.

Weitere Vorteile und Merkmale der Erfindung werden nachfolgend an Hand der Figuren beschrieben.
- Figur 1: illustriert schematisch ein erstes Ausführungsbeispiel einer Messvorrichtung zum Bestimmen von Positionskoordinaten gemäß der vorliegenden Erfindung und
- Figur 2: illustriert ein weiteres Beispiel einer Messvorrichtung zum Bestimmen von Positionskoordinaten gemäß der vorliegenden Erfindung mit einem Referenzzielelement.

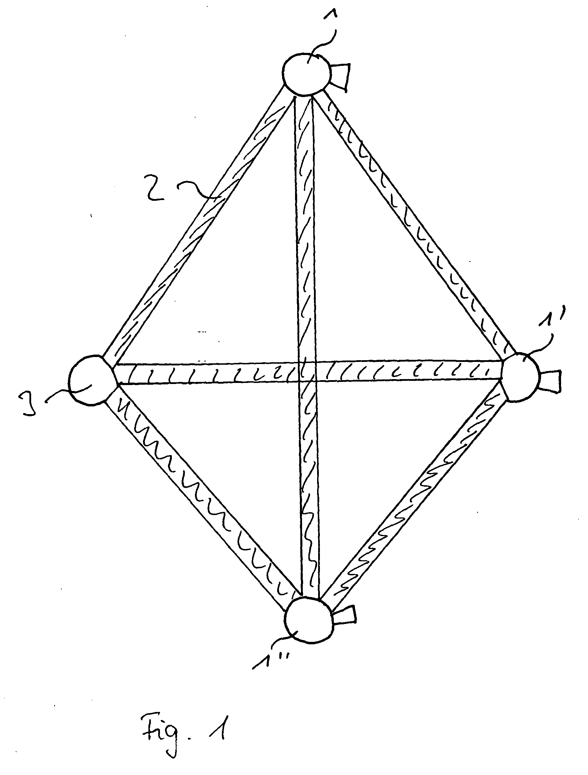

Ein Beispiel einer Messvorrichtung zum Bestimmen von Positionskoordinaten gemäß der vorliegenden Erfindung ist in Figur 1 schematisch illustriert. In dem gezeigten Beispiel umfasst die Messvorrichtung drei Entfernungsmesseinrichtungen 1, 1' und 1" die in Form von Laser-Trackern ausgebildet sind. In der gezeigten Figur sind die Laser-Tracker kugelförmig dargestellt. Dies ist jedoch nur eine schematische Wiedergabe, die äußere Gestalt der Laser-Tracker kann auch anders ausgebildet sein. Die Laser-Tracker sollen bewegbar sein und entsprechende Servomotoren umfassen.

Die Laser-Tracker 1, 1' und 1" sind über Verbindungselemente 2 miteinander verbunden. Insgesamt weist die Messvorrichtung sechs Verbindungselemente auf, welche die Kanten eines regulären Tetraeders bilden. Die Laser-Tracker sind an drei der vier Kanten angeordnet. Die letzte Kante bildet ein Kantenelement 3, dessen äußere Gestalt der Gestalt der Laser-Tracker entspricht, um die Symmetrie des regulären Tetraeders zu gewährleisten.

Grundsätzlich können die Laser-Tracker und auch das Eckenelement fest mit den Verbindungselementen verbunden sein. Um den Transport der Messvorrichtung zu vereinfachen, ist es jedoch wünschenswert, wenn die Verbindungselemente und die Laser-Tracker bzw. das Eckenelement miteinander lösbar verbindbar sind. Dies kann beispielsweise durch eine Verbindung auf Grund von magnetischen Kräften erreicht werden. Vorzugsweise sind die Verbindungselemente an ihren Enden derart ausgebildet, dass die Laser-Tracker bzw. das Eckenelement in einer möglichst eindeutigen Position damit verbunden werden können.

Das Material der Verbindungselemente umfasst CFK. Insbesondere kann ein CFK unter Verwendung von Tennax UMS 252624K Fasern und Harz mit der DIN Bezeichnung L 160 sowie Härter mit der DIN Bezeichnung H 163 hergestellt werden. Damit kann ein thermischer Längenausdehnungskoeffizient von |α|≤ 0.1 µ*m* /°C*m* erreicht werden.

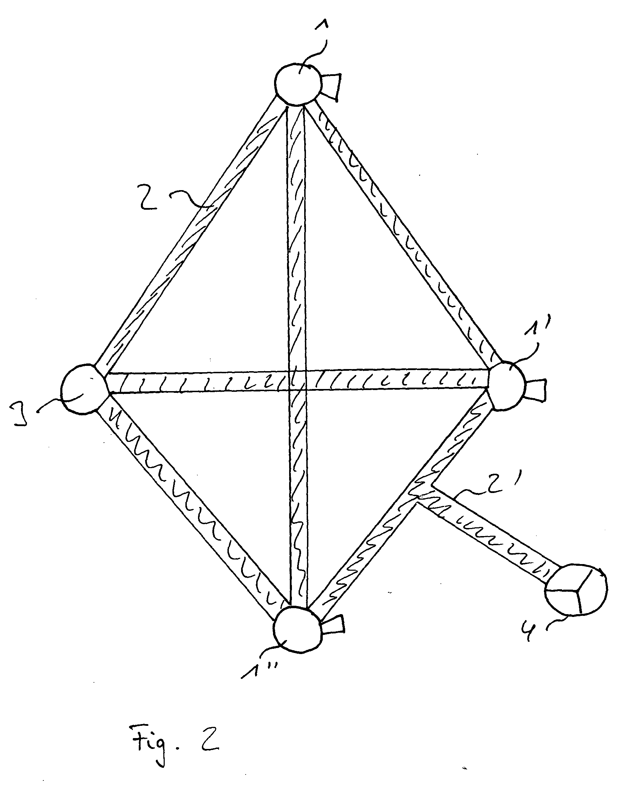

Ein weiteres Ausführungsbeispiel einer Messvorrichtung ist in Figur 2 gezeigt. Auch in diesem Ausführungsbeispiel bilden die Verbindungselemente 2 die Kanten eines regulären Tetraeders während die Laser-Tracker 1, 1' und 1" sowie das Eckenelement 3 die Ecken des regulären Tetraeders bilden. Weiterhin umfasst die gezeigte Messvorrichtung ein T-förmiges Verbindungselement 2', das einerseits die Laser-Tracker 1' und 1" verbindet und andererseits mit einem Referenzzielelement 4 in Form eine Retroreflektors verbunden ist.

Zu Beginn einer Messung zum Bestimmen von Positionskoordinaten wird die Messvorrichtung ausgerichtet bzw. kalibriert. In dem gezeigten Beispiel kann dies dadurch erreicht werden, dass die Laser-Tracker 1, 1' und 1" auf das Referenzzielelement 4 gerichtet werden, der dann den Nullpunkt für die nachfolgenden Entfernungsmessungen darstellt. Alternativ ist es jedoch auch möglich, die Ausrichtung der Messvorrichtung konstruktiv und/oder rechnerisch herzustellen. Eine konstruktive Ausrichtung könnte beispielsweise dadurch erzielt wird, dass bestimmte Winkel (horizontal und vertikal) der Winkelencoder der Laser-Tracker als Nullrichtung gesetzt werden. Eine rechnerische Ausrichtung lässt sich beispielsweise durch ein Ausmessen von vier Punkten (beispielsweise eines tetraedrischen Prüfkörpers, wie er in der DE 199 15 12 offenbart ist) durch alle drei Laser-Tracker realisieren.

Die Laser-Tracker sind mit einer Auswerteeinrichtung, beispielsweise einem Computer, verbunden. Diese Verbindung kann insbesondere auf drahtlosem Wege verwirklicht sein. Die Auswerteeinrichtung dient dazu, die gemessenen Ergebnisse der Laser-Tracker zu verarbeiten und zusammenzuführen, um daraus die Positionskoordinaten zu bestimmen.

Nach der Ausrichtung der Messvorrichtung wird die tatsächliche Messung durchgeführt. Hierzu werden die Laser-Tracker auf einen Zielpunkt gerichtet, dessen Koordinaten zu bestimmen sind. Dies erfolgt dadurch, dass eine Spiegelanordnung, beispielsweise ein Retroreflektor, zu dem Zielpunkt bewegt wird, wobei die Laser-Tracker der Spiegelanordnung folgen. Dies kann beispielsweise durch eine automatische Zielverfolgung geschehen. Andere Varianten sind allerdings auch möglich. So können beispielsweise die Laserstrahlen manuell geführt werden. Gemäß einer weiteren Alternative erfolgt eine Grobausrichtung der Laser-Tracker mittels Bildverarbeitungsmethoden; eine anschließende Feinausrichtung kann an Hand der Schnittmenge der Laserstrahlen basierend auf der gemessenen Intensitätsverteilung durchgeführt werden.

Die Distanzmessung beruht auf der Messung mit Laserstrahlen, deren Wellenlänge permanent überwacht (beispielsweise mit einem Interferometer) werden kann. Diese Wellenlänge kann auch als Maßstab für die gemessene Strecke verwendet werden. Alternativ können auch die Längen der Verbindungselemente bzw. die relativen Abstände der Laser-Tracker als Maßstab genutzt werden.

Die Koordinaten des Zielpunkts werden dann über den Schnitt der gemessenen Entfernungen bestimmt. Durch die Messung von drei Entfernungen lassen sich die Koordinaten bereits eindeutig bestimmen. Zusätzlich können jedoch Winkelmessungen (mittels der verwendeten Laser-Tracker) oder zusätzliche Entfernungsmessungen (mit einem weiteren Laser-Tracker) durchgeführt werden. In einem solchen Fall liegt eine Überbestimmung vor, mit der für die Koordinaten der Fehler bzw. die Genauigkeit angegeben werden.

Falls weniger als drei Entfernungen gemessen werden, können diese Richtungen (im Verhältnis zu der Anzahl der gemessenen Größen gewichtet) hinzugezogen werden.

## Patentansprüche

1. Messvorrichtung zum Bestimmen von Positionskoordinaten, umfassend wenigstens zwei Entfernungsmesseinrichtungen und wenigstens ein Verbindungselement zum Verbinden der zwei Entfernungsmesseinrichtungen, wobei das wenigstens eine Verbindungselement derart ausgebildet ist, dass der Abstand zwischen den wenigstens zwei Entfemungsmesseinrichtungen während einer Messung bestimmbar oder bei Standardmessbedingungen im Wesentlichen konstant ist.

2. Messvorrichtung nach Anspruch 1, umfassend drei Entfernungsmesseinrichtungen und wenigstens zwei Verbindungselemente.

3. Messvorrichtung nach Anspruch 1, wobei das wenigstens eine Verbindungselement stabförmig ausgebildet ist.

4. Messvorrichtung nach einem der vorangegangenen Ansprüche, umfassend sechs Verbindungselemente, wobei die Verbindungselemente die Kanten eines Tetraeders und die wenigstens zwei Entfernungsmesseinrichtungen jeweils eine Ecke des Tetraeders bilden.

5. Messvorrichtung nach einem der vorangegangenen Ansprüche, wobei das wenigstens eine Verbindungselement und die wenigstens zwei Entfernungsmesseinrichtungen, insbesondere durch magnetische Kräfte, miteinander lösbar verbindbar sind.

6. Messvorrichtung nach einem der vorangegangenen Ansprüche, wobei das wenigstens eine Verbindungselement ein Material umfasst, das einen thermischen Längenausdehnungskoeffizienten von α = *0±20 µm*/*°Cm ,* vorzugsweise *α* = 0 ± 10 µ*m*/*°Cm,* höchst vorzugsweise α = 0 ± 1*µm*/*°Cm* umfasst.

7. Messvorrichtung nach Anspruch 6, wobei das Material CFK umfasst.

8. Messvorrichtung nach einem der vorangegangenen Ansprüche, wobei jede Entfernungsmesseinrichtung ein Interferometer, vorzugsweise ein Laser-Interferometer, umfasst.

9. Messvorrichtung nach einem der vorangegangenen Ansprüche, wobei wenigstens eine Entfernungsmesseinrichtung wenigstens eine Winkelmesseinrichtung umfasst.

10. Messvorrichtung nach einem der vorangegangenen Ansprüche, wobei jede Entfernungsmesseinrichtung wenigstens einen Servomotor umfasst.

11. Messvorrichtung nach Anspruch 10, wobei jede Entfernungsmesseinrichtung zur automatischen Zielverfolgung ausgebildet ist.

12. Messvorrichtung nach einem der vorangegangenen Ansprüche, umfassend ein Referenzzielelement.

13. Verfahren zum Bestimmen von Positionskoordinaten mit den Schritten:
a) Ausrichten einer Messvorrichtung nach einem der vorangegangenen Ansprüche,
b) Richten der Entfernungsmesseinrichtungen auf einen Zielpunkt,
c) Bestimmen der Entfernungen zu dem Zielpunkt durch jede Entfernungsmesseinrichtung,
d) Bestimmen der Positionskoordinaten aus den bestimmten Entfernungen.

14. Verfahren nach Anspruch 13, wobei Schritt a) ein Ausrichten der Entfernungsmesseinrichtungen auf ein Referenzzielelement der Messvorrichtung umfasst.

15. Verfahren nach Anspruch 13 oder 14, wobei die Messvorrichtung drei Entfernungsmesseinrichtungen und Schritt d) ein Bestimmen des Schnittpunkts der drei Entfernungen umfasst.

16. Verfahren nach einem der Ansprüche 13 - 15, wobei Schritt c) weiterhin ein Bestimmen wenigstens eines Winkels und Schritt d) ein Bestimmen aus den bestimmten Entfernungen und dem wenigstens einen bestimmten Winkel umfasst.
